# EUROPEAN PATENT APPLICATION

(11) **EP 2 703 078 A1**
(43) Date of publication of application: **05.03.2014**
(21) Application number: 12006217.9
(22) Date of filing: 03.09.2012
(51) Int. Cl.: B01J 23/66, B01J 35/00, B01J 37/02, C01B 3/04

(54) **Photocatalyst comprising gold-palladium alloy, method for preparation, photolysis system**

(71) Applicant: Saudi Basic Industries Corporation, Riyadh 11422 (SA)
(72) Inventor: The designation of the inventor has not yet been filed
(74) Representative: Modiano, Micaela Nadia

(57) **Abstract**

The present invention relates to a photocatalyst for the generation of diatomic hydrogen from a hydrogen containing precursor under the influence of actinic radiation comprising a semiconductor support and a gold and palladium alloy on said semiconductor support. The present invention further relates to a method for generating diatomic hydrogen by photolysis and a photolysis system.

## Description

The present invention relates to a photocatalyst for the generation of diatomic hydrogen from a hydrogen containing precursor under the influence of actinic radiation comprising a semiconductor support and a metal on said semiconductor support.

The present invention further relates to a method for preparation of such a photocatalyst, a photolysis system and to a method for generating diatomic hydrogen from hydrogen containing precursors.

Energy and environmental issues at a global level are important topics and to that extent focus has been on the generation of clean energy for some time. Hydrogen in its diatomic form as an energy carrier has the potential to meet at least in part the global energy needs. As a fuel, hydrogen boasts great versatility from direct use in internal combustion engines, gas turbines or fuel cells for both distributed heat and electricity generation needs. As a reacting component, hydrogen is used in several industrial chemical processes, such as for example the synthesis methanol, higher hydrocarbons and ammonia.

Unfortunately hydrogen is not naturally available in abundance in its diatomic form (H₂, also referred to as molecular hydrogen or diatomic hydrogen). Rather, due to its high reactivity, hydrogen is more commonly bonded to other elements, for example oxygen and/or carbon, in the form of water and hydrocarbons. The generation of diatomic hydrogen from these compounds is in contention with the laws of thermodynamics and therefore requires additional energy to break these naturally occurring bonds.

When diatomic hydrogen is reacted with oxygen the energy stored within the H-H bond is released while producing water (H₂O) as the end product. This, combined with the energy density of hydrogen of about 122 kJ/g gives clear advantages for the use of diatomic hydrogen as a fuel.

At present diatomic hydrogen is produced mainly from fossil fuels, biomass and water. Although the technique of diatomic hydrogen production by steam reforming of natural gas is mature it cannot guarantee long-term strategy for a hydrogen economy because it is neither sustainable nor clean. The diatomic hydrogen production through the electrolysis of water is not an energy efficient process as diatomic hydrogen obtained through this process carries less energy than the energy input that is needed to produce it.

Thus, research has focused on the development of new methods to produce hydrogen from renewable resources. Biomass is considered a renewable energy source because plants store solar energy through photosynthesis processes and can release this energy when subjected to an appropriate chemical process, i.e. biomass burning. In this way, biomass functions as a sort of natural energy reservoir on earth for storing solar energy.

The worldwide availability of solar energy is said to be about 4.3 x 10²⁰ J/h , corresponding to a radiant flux density of about 1000 W/m². About 5% of this solar energy is believed to be UV radiation with a light energy of above 3eV. An advantageous method of storing this solar energy is through the generation of diatomic hydrogen. To that extent solar energy may be used in the photocatalysis of water or biomass products such as bio-ethanol into diatomic hydrogen.

Photocatalysis was first reported by Fujishima and Honda (Electrochemical Photolysis of Water at a Semiconductor Electrode, A. Fujishima and K. Honda, Nature, 1972, 238, 37). Since then numerous photocatalysts have been reported both in patent and scientific literature. A summary is provided by Kudo and Miseki (Heterogeneous photocatalyst materials for water splitting, A. Kudo, Y. Miseki, Chem. Soc. Rev., 2009, 38, 253-278). Others have reported that TiO₂ is the most photo catalytically active natural semiconductor known and that efficient use of sunlight can be obtained by modifying TiO₂ with noble metals, doping TiO₂ with other ions, coupling with other semiconductors, sensitising with dyes, and adding sacrificial reagents to the reaction solution (Nadeem et al., The photoreaction of TiO2 and Au/TiO2 single crystal and powder with organic adsorbates, lnt J. Nanotechnol., Vol. 9, Nos. 1/2, 2012; Photocatalytic hydrogen production from ethanol over Au/TiO2 anatase and rutile nanoparticles, Effect of Au particle size, M. Murdoch, G.W.N. Waterhouse, M.A. Nadeem, M.A. Keane, R.F. Howe, J. Llorca, H. Idriss*, Nature Chemistry, 3, 489-492 (2011); The Photoreaction of TiO2 and Au/Ti02 single crystal and powder Surfaces with organic adsorbates. Emphasis on hydrogen production from renewable. K. A. Connelly and H. Idriss*, Green Chemistry, 14 (2), 260-280 (2012)).

A problem related to known photocatalysts is that they will not only actively generate hydrogen, but also actively react hydrogen and oxygen. This has the effect that the water photolysis may be followed by a reverse reaction of hydrogen and oxygen into water so that the overall rate of diatomic hydrogen generation is reduced. For example, when a photocatalyst supporting platinum is suspended in water and the suspension is irradiated with light, the hydrogen and oxygen which are generated through photolysis will mix before they leave the catalyst in the form of separate bubbles. The mixed hydrogen and oxygen may contact and react with the platinum and form water again. Hence only a relatively small amount of hydrogen and oxygen can be obtained.

In order to solve and/or compensate for this problem processes have been proposed for increasing the contact between light and the photocatalyst by dispersing powdery semiconductor photo catalysts in water and shaking the entire reaction apparatus. This shaking requires the use of mechanical energy so that the amount of energy used to generate hydrogen may be higher than the amount of energy that is obtained in the form of diatomic hydrogen.

Another solution that has been proposed is to place a photocatalyst on a water-absorbing material, and dampening the surface by impregnating the water-absorbing material with water, then irradiating the surface with light from above. A problem associated with this solution is that the photocatalyst disperses only on the surface of the water-absorbing material leading to inefficient use of the photocatalyst.

The solution proposed in US 2009/0188783 overcomes the aforementioned problems and proposes a photolysis system which comprises a casing into which incident light can enter from the outside and a photolytic layer which is disposed inside the casing; wherein the photolytic layer has a light-transmissive porous material and a photocatalyst supported on the porous material; a water layer containing water in its liquid state is placed below the photolytic layer via a first space; a sealed second space is formed above the photolytic layer in the casing. In the proposed configuration, vapor generated from the water layer is introduced into the photolytic layer via the first space and the vapor is decomposed into hydrogen and oxygen by the photocatalyst, which is excited by the light.

A problem associated with the solution of US 2009/0188783 however is that it requires a relatively complex photolysis system which may be cost ineffective.

An object of the present invention is to provide a photocatalyst for the generation of diatomic hydrogen from a hydrogen containing precursor that provides a good yield in terms of diatomic hydrogen generation.

A further object of the present invention is to provide a photocatalyst for the generation of diatomic hydrogen from a hydrogen containing precursor in its liquid state.

A further object of the present invention is to provide a photocatalyst for the generation of diatomic hydrogen from hydrogen containing precursors that limits the reverse reaction of hydrogen and oxygen to water during photolysis.

To that extent the present invention is directed to a photocatalyst for the generation of diatomic hydrogen from a hydrogen containing precursor under the influence of actinic radiation comprising a semiconductor support and a gold and palladium alloy on said semiconductor support.

The present inventors have surprisingly found that such a photocatalyst increases the rate of generation of diatomic hydrogen which is believed to result at least in part by the reduced tendency for the backward reaction of hydrogen and oxygen to water. Without willing to be bound by it the present inventors believe this effect is obtained because of the following reason. Palladium metal has a relatively high electron mobility which is advantageous for fast hydrogen generation. However palladium also reduces the activation energy for hydrogen oxidation meaning that in principle palladium would enhance the backward reaction of hydrogen and oxygen into water. Gold, having similar electron mobility to palladium, has a higher activation energy for hydrogen oxidation and is therefore poised to be more selective for hydrogen generation when compared to palladium. In addition, an alloy of gold and palladium was found to have a surface that is enriched with gold. From this the present inventors conclude that the backward reaction, which occurs on the surface of the alloy, is less favourable, yet the generation of hydrogen by means of photocatalysis is increased in view of the palladium which is present in the alloy. The present inventors have found that the photocatalytic generation of hydrogen is not strictly sensitive to the surface of the metal as per thermal catalytic reactions, but rather depends more on the bulk structure of the catalyst, including also the semiconductor support.

Hence when the catalyst according to the present invention is employed in a photolysis system at least one of the objectives is met.

The palladium and gold alloy is preferably present on the semiconductor support as particles. Such particles preferably have an average major axis length of from 1 - 50nm preferably from 1 - 25nm, more preferably 1 - 10nm. The dimensions of the alloy particles may be determined by transmission electron microscopy (TEM). The skilled person will understand that the alloy particles may not be perfectly spherical or circular in shape. Hence, a major axis length as used herein is to be understood as meaning the maximum axis length of the particle. The average major axis length is a numerical average. The alloy particles in the photocatalyst of the present invention preferably have a major axis length of at most 200nm, preferably at most 100nm, more preferably at most 50nm even more preferably at most 25nm.

The composition of the alloy is such that the surface thereof is enriched with gold. The present inventors have found that this effect is obtained over a broad range of palladium and/or gold contents. Embodiments of the gold and palladium alloy may comprise from 10 - 90 wt% palladium and from 90 - 10 wt% gold, or from 30 - 70 wt% palladium and from 70 - 30 wt% gold, or from 40 - 60 wt% palladium and from 60 - 40 wt% gold, the weight% being based on the weight of the alloy. For reason of availability and hence cost the amount of gold in the gold and palladium alloy may be kept at a minimum while maintaining the benefit of the enriched surface of the alloy.

It is preferred that no materials other than palladium and gold are comprised in the allow. That said, the present inventors believe that alloy may provide advantageous functionality if some other materials, such as metals are part of the alloy. Such further materials may be copper, silver, nickel, manganese, aluminum, iron and indium. The gold and palladium alloy comprises at least 90wt% preferably at least 95wt%, more preferably at least 99wt% of palladium and gold, based on the weight of the alloy.

Preferably the composition of the palladium and gold alloy is selected such that it has a Plasmon loss in the range from 500nm to 600nm as determined by UV-Vis reflectance absorption. Although the mechanism is not fully understood the present inventors believe that a Plasmon loss in this range enhances the photoreaction.

The amount of alloy is selected to obtain a certain desirable hydrogen generation rate. Preferably the amount of alloy is from 0.1 - 10 wt%, preferably from 0.4 to 8 wt% based on the total weight of the support and the alloy.

The gold and palladium of the alloy are preferably present for at least 90 wt%, or 95wt%, or 99wt% in their non-oxidised state. Non-oxidised means that the gold and/or palladium is in its pure metal state hence not bound to any oxidising material such as oxygen. In the embodiment where the alloy further comprises copper, silver, nickel, manganese, aluminum, iron and indium at least 90 wt%, or 95wt%, or 99wt% of these materials is preferably in the non-oxidised state.

It should be understood that this condition is preferred when the photocatalyst is used for the first time and/or after having been exposed to oxygen for some time between photolysis reactions. When the gold and/or palladium are in an oxidised state their activity is lower. The present inventors nevertheless have found that, in the embodiment where the gold and/or palladium are in an oxidised state, the activity of the photocatalyst will improve upon its use. A possible reason for this being that the hydrogen which is generated will reduce the gold or palladium during the photolysis. In order to increase the activity, the photocatalysts according to the present invention may be exposed to reducing conditions prior to being used in photolysis.

The support used in the photocatalyst of the present invention is a semiconductor support, preferably having a band-gap of from 2.5 eV to 3.5 eV. Particularly preferred supports are supports containing titanium and oxygen. The semiconductor support may be selected from the group consisting of TiO₂ SrTiO_{3,} SnTiO₄, BaTiO₃, a mixture of TiO₂ and SrTiO₃, a mixture of TiO₂ and CeO₂, a mixture of SrTiO₃ and CeO₂, and a mixture of TiO₂, SrTiO₃ and CeO₂. The material which is preferably used for the semiconductor support is TiO₂. Further suitable supports include SnNb₂O₆, SnNbO₃ and BiVO₄.

Preferably the semiconductor support predominantly consists of these materials, meaning that at least 90%, preferably at least 95%, more preferably at least 99% of the semiconductor support consists of said material. In an embodiment where the semiconductor support is in the form of particles the photocatalyst may comprise a mixture of semiconductor support particles, wherein the support particles consist predominantly of one of the above mentioned materials yet wherein particles mutually differ in the predominant material.

For the avoidance of doubt it should be understood that the components in the semiconductor support comprised of a mixture of materials are physically inseparable and should not to be confused with semiconductor supports wherein the components form merely a physical mixture.

The semiconductor support is comprised of particles having an average major axis length of from 3nm to 100nm and preferably a major axis length of at most 200nm, more preferably at most 150nm.

For the avoidance of doubt it should be understood that the semiconductor support is an essential part of the catalyst and participates in the reactions.

The present inventors observed that the particle size of the alloy particles generally was smaller than the particle size of the support.

The photocatalyst of the present invention preferably has a BET surface area of from 10 - 50 m² per gram photocatalyst using the nitrogen absorption technique. The term "BET surface area" is a standardized measure to indicate the specific surface area of a material and is very well known in the art. Accordingly, the BET surface area as used herein is measured by the standard BET nitrogen test according to ASTM D-3663-03, ASTM International, October 2003.

The photocatalyst of the present invention may be prepared by the steps of providing a semiconductor support and depositing gold and palladium onto the semiconductor support so that a gold and palladium alloy is formed on the semiconductor support. Hence, the present invention relates to a photocatalyst for the generation of diatomic hydrogen from a hydrogen containing precursor under the influence of actinic radiation comprising a semiconductor support and a gold and palladium alloy deposited on said semiconductor support. The alloy is preferably formed during or after the deposition of gold and palladium, but the present inventor do not exclude methods which allow an already formed alloy to be deposited on the semiconductor support.

The deposition may be carried out with a co-impregnation technique wherein gold and palladium are deposited onto the semiconductor support as an alloy. The co-impregnation technique commonly involves three steps. In a first step the semiconductor support is contacted with an impregnating solution comprising the gold and palladium, for example in the form of a soluble salt. In a second step the obtained wet semiconductor particles are dried to remove the liquid and in a third step the photocatalyst is activated by calcination. A method of co-impregnation is known to those skilled in the art. The present inventors surprisingly found that photocatalysts prepared by co-impregnation of gold and palladium have relatively high activity. The present inventors believe that the co-impregnation method results in a relatively large alloy particle size, which alloy particles, as a result of this alloy particle size, have a considerable Plasmon loss effect. Consequently such alloy particles are more active materials for absorbing sun light in the visible region. In addition to that the alloy particles comprising gold and palladium have a surface which is enriched with gold.

Photocatalysts obtained by the method of the invention may be used in the photolysis of hydrogen containing precursors.

Diatomic hydrogen may be generated from a hydrogen containing precursor by contacting a photocatalyst according to the present invention with the hydrogen containing precursor while exposing the photocatalyst to actinic radiation.

The term hydrogen containing precursor as used herein is to be understood as meaning a compound containing chemically bonded hydrogen atoms and which compound may successfully be used as a raw material for the photocatalytic generation of diatomic hydrogen, H₂. Hydrogen containing compounds that do not result in the photocatalytic generation of diatomic hydrogen are not to be considered as hydrogen containing precursors. For example, alkanes do not generate hydrogen when contacted with the photocatalyst according to the present invention.

The hydrogen containing precursor as used in the photocatalytic process according to the present invention are preferably selected from the group consisting of water, alcohols, diols and mixtures of at least two of these hydrogen containing precursors. It is particularly preferred to use a mixture of water with one or more alcohols, a mixture of water and one or more diols, or a mixture of water and one or more alcohols and one or more diols. The alcohols and/or diols are water soluble, preferably at room temperature. Hence it is preferred that the hydrogen containing precursor is an aqueous solution of at least one alcohol, an aqueous solution of at least one diol, or an aqueous solution of at least one alcohol and at least one diol.

Preferred alcohols are lower alcohol having from 1 - 5 carbon atoms and are preferably selected from the group consisting of ethanol, methanol, propanol, isopropanol, butanol and isobutanol. Preferred diols are selected from the group consisting of ethylene glycol, 1,4 butanediol, propylene-1,3-diol.

For reason of readily availability it is preferred that the hydrogen containing precursor is a mixture of water and alcohol, preferably ethanol, wherein the amount of alcohol may be from 1% to 95% by weight. Ideally ethanol originating from biomass is used. The use of high concentrations of alcohol and/or diol in water however hinders the application of the photocatalytic process in that the energy needed to make the alcohols and/or diols, in particular if not coming from renewable sources, outweighs the energy gained from the obtained hydrogen. The present inventors however found that the photocatalyst of the present invention shows high activity even when using relatively low concentrations of alcohol and/or diol in water.

In an embodiment the hydrogen containing precursor is a mixture of water and alcohol wherein the amount of alcohol is from 0.1 to 10 % by volume, a mixture of water and diol wherein the amount of diol is from 0.1 to 10 % by volume, or a mixture of water, alcohol and diol wherein the combined amount of alcohol and diol is from 0.1 to 10% by volume based on the mixture. Preferably the mixture is an aqueous solution. The present inventors believe that the generation of diatomic hydrogen is not limited to water, alcohols and diols, but that other hydrogen containing materials such as for example sugars may also be successfully employed. For example, an aqueous solution of certain sugars may also yield generation of diatomic hydrogen.

The alcohols and/or diols as used in the method according to an embodiment of the present invention act as so called sacrificial agents. Sacrificial agents are compounds that inject electrons into the valence band so as to function as a "hole trap" or "hole scavenger". This property of the sacrificial agent has the effect that electron - hole recombination is prevented or at least reduced to a minimum and that electrons in the conducting band can be transferred to the gold and palladium alloy, so as to reduce hydrogen ions and to form diatomic hydrogen molecules. Sacrificial agents exist which do not result in the formation of diatomic hydrogen and are therefore not embraced by the term hydrogen containing precursor. In a further embodiment of the present invention the method for generating diatomic hydrogen comprises contacting a photocatalyst according to the present invention with a hydrogen containing precursor in the presence of a sacrificial agent, which is not a hydrogen containing precursor as defined herein, while exposing the photocatalyst to actinic radiation. In such embodiment the combined amount of sacrificial agent and optional diol(s) and alcohol(s) is from 0.1 - 10 % by volume.

Actinic radiation as used herein is to be understood to mean radiation that is capable of bringing about the generation of diatomic hydrogen according to the aforementioned method for generating diatomic hydrogen. To that extent the actinic radiation will have at least a portion in the UV wavelength range being defined herein as from 10nm to 400nm. Preferably UV radiation in the range from 300nm to 400nm is used. Actinic radiation having a wavelength of less than 300nm was found to be impractical in the context of the present invention. The photonic energy of the actinic radiation has to match at least the band gap energy of the photocatalyst.

To that extent the actinic radiation as used in the method for generating diatomic hydrogen according to the present invention preferably has a photonic energy of at least 2.5 eV, preferably at least 2.9 eV and preferably at most 3.5eV. Hence, also a part of the visible light, up to about a wavelength of 500nm, could effectively be used as actinic radiation.

The radiant flux density of the actinic radiation, sometimes referred to as intensity, is preferably in the range from 0.1 mW/cm² to 3.0 mW/cm², more preferably about 1 mW/cm². Depending on season and geographical location this intensity is close to the UV intensity provided by sunlight, meaning that the photocatalytic formation of diatomic hydrogen can be carried out in a sustainable manner if sunlight is used.

Consequently the method for generating diatomic hydrogen from a hydrogen containing precursor according to the present invention preferably comprises contacting a photocatalyst according to the invention with a hydrogen containing precursor while exposing the photocatalyst to sunlight. The skilled person will understand that the sunlight may be concentrated by means of for example lenses so as to obtain the desired radiant flux density. This is in particular relevant for those locations on earth where the intensity from the sun is relatively low.

The photocatalyst according to the present invention may be used in any photolysis system for the generation of diatomic hydrogen from a hydrogen containing precursor. Generally such systems comprise a reaction zone where the actual generation of diatomic hydrogen occurs and one or more separation zones for separating the diatomic hydrogen from other gasses that may be formed or are otherwise present. The systems that may be used includes photolysis systems where the photocatalyst is contacted with the hydrogen containing precursor in its liquid state but also systems where the photocatalyst is contacted with hydrogen containing precursors in its gaseous state, such as for example disclosed in US 7,909,979. A combination system where diatomic hydrogen is formed from hydrogen containing precursors both in the liquid state as in the gaseous state is considered as a possible embodiment of the present invention, which would allow the use of a mixture hydrogen containing precursors having mutually different vapor tensions.

The present invention will now be explained by the following non-limiting Figure and examples.

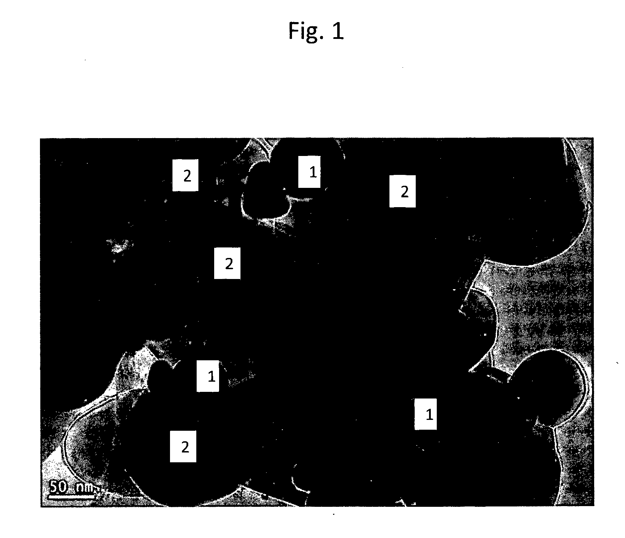

Figure 1 is a TEM picture of a photocatalyst according to the present invention.

### Photocatalyst preparation

Photocatalysts according to the invention were prepared using the co-impregnation technique, wherein gold and palladium are deposited onto the semiconductor support. Gold was provided in the form of HAuCl₂ and palladium was provided in the form of PdCl₂. Several catalysts were prepared according to this method, details are provided in Table 1 below. The support in all experiments was titanium dioxide, TiO₂. Comparative catalysts were prepared using a deposition precipitation technique using either HAuCl₂, PdCl₂, or both HAuCl₂ and PdCl₂ The support for these comparative catalysts was titanium dioxide, TiO_{2.}

### Photolysis

Prior to the photolysis the catalysts were reduced with hydrogen at a temperature in the range from 300 to 500°C.

Next, 10 to 50 mg of photocatalyst was introduced into a Pyrex reactor with a total volume of between 100 and 250 ml. After purging with nitrogen, 10 to 20 ml of hydrogen containing precursor (see Table 1 below) were introduced into the reactor so as to form a suspension. This was followed by further purging with nitrogen to degas the water and/or ethanol solutions.

The reaction was started by exposing the suspension to sunlight or to UV light having a wavelength of about 360nm and an intensity of about 1 mW/ cm². The UV flux from the sun oscillated between 0.1 and 0.4 mW/cm² from 7am to 4 pm.

Extraction of the gas formed was conducted using a syringe. The extracted gas was analyzed using a gas chromatography device equipped with a thermal conductivity detector.

**Table 1**

| ID | Photocatalyst composition | | H₂ rate [mol H₂/g_{catal}.min] | precursor |
|---|---|---|---|---|
| | Au [wt%] | Pd [wt%] | | |
| C1^{a} | 0.5 | 0 | 0.02 x 10⁻⁵ | ethanol |
| C2^{a} | 0 | 1 | 0.04 x 10⁻⁵ | ethanol |
| C3^{a} | 0.5 | 0.5 | 0.6 x 10⁻⁵ | 1.5 vol. % ethylene glycol in water |
| C4^{a} | 0.5 | 0.5 | 0.5 x 10⁻⁵ | 1.5 vol. % ethylene glycol in water |
| C5^{a} | 0.5 | 0.5 | 0.5 x 10⁻⁵ | 0.3 vol. % ethanol in water |
| C6^{a} | 0.5 | 0.5 | 0.3 x 10⁻⁵ | 0.1 vol. % ethanol in water |
| C7^{a} | 1 | 1 | 0.5 x 10⁻⁵ | 0.15 vol. % methanol in water |
| C8^{a} | 0.5 | 0.5 | 0.5 x 10⁻⁵ | 0.15 vol. % methanol + 0.1 % ethanol in water |
| C9^{b} | 1 | 1 | 0.1 x 10⁻⁵ | ethanol |

| | | | | |
|---|---|---|---|---|
| a. Co-impregnation; b. Deposition precipitation from Au after impregnation of Pd on TiO₂. | | | | |

Photocatalysts C1 and C2 are not according to the present invention as they only contain either gold (Au) or palladium (Pd).

Photocatalyst C9 is not according to the invention because this catalyst was prepared using a deposition precipitation technique that did not result in the formation of a gold and palladium alloy. Co-impregnation results in the desired formation of a gold and palladium alloy.

A TEM photocatalyst according to the present invention is shown in Figure 1. The small dark spots, some of them indicated with reference numeral 1 are gold and palladium alloy particles whereas the titanium dioxide semiconductor support is visible as the lighter, and somewhat larger particles. Some of the semiconductor support particles are indicated by reference numeral 2.

## Claims

1. A photocatalyst for the generation of diatomic hydrogen from a hydrogen containing precursor under the influence of actinic radiation comprising a semiconductor support and a gold and palladium alloy on said semiconductor support.

2. The photocatalyst according to claim 1 wherein the alloy is present on the semiconductor support as particles having an average major axis length of from 1 - 100nm preferably from 1 - 50nm.

3. The photocatalyst according to one or more of preceding claims 1 - 2 wherein the alloy comprises from 10 - 90 wt% palladium and from 90 - 10 wt% gold, preferably from 30 - 70 wt% palladium and from 70 - 30 wt% gold, more preferably from 40 - 60 wt% palladium and from 60 - 40 wt% gold based on the weight of the alloy.

4. The photocatalyst according to one or more of the preceding claims 1 - 3 wherein the semiconductor support contains titanium and oxygen and is preferably selected from the group consisting of TiO₂, SrTiO₃, SnTiO₄, BaTiO₃, CeO₂-TiO₂.

5. The photocatalyst according to one or more of the preceding claims 1 - 4 wherein the amount of alloy is from 0.1 - 10 wt%, preferably from 0.4 to 8 wt% based on the total weight of the support and the alloy.

6. The photocatalyst according to one or more of the previous claims 1 - 6 wherein the catalyst has a BET surface area of from 10 - 50 m² per gram photocatalyst using the nitrogen absorption technique.

7. A method for preparing a photocatalyst according to one or more of claims 1 - 6 comprising the steps of providing a semiconductor support and depositing gold and palladium so that a gold and palladium alloy is formed on the semiconductor support.

8. A method for generating diatomic hydrogen from a hydrogen containing precursor, comprising contacting a photocatalyst according to one or more of the preceding claims 1 - 6 with the hydrogen containing precursor while exposing the photocatalyst to actinic radiation.

9. The method according to claim 8 wherein the actinic radiation has a photonic energy of at least 2.5 eV, preferably at least 2.9 eV and preferably at most 3.5eV and a radiant flux density of at least 0.1 mW/cm² and preferably at most 3mW/cm².

10. The method according to claim 8 or 9 wherein the hydrogen containing precursor is selected from the group consisting of water, diols, alcohols and mixtures of at least two of these hydrogen containing precursors.

11. The method of one or more of preceding claims 8 - 10 wherein the hydrogen containing precursor is a mixture of water and alcohol wherein the amount of alcohol is from 0.1 to 10 % by volume, a mixture of water and diol wherein the amount of diol is from 0.1 to 10 % by volume, or a mixture of water, alcohol and diol wherein the combined amount of alcohol and diol is from 0.1 to 10 % by volume based on the volume of the mixture.

12. The method of claim 11 wherein the alcohol is selected from the group consisting of ethanol, methanol, propanol, isopropanol, butanol, iso-butanol and mixtures of at least two of these alcohols.

13. The method according to any one or more of the preceding claims 11 - 12 wherein the mixture is an aqueous solution.

14. Photolysis system for the generation of diatomic hydrogen with the method according to claim 9 comprising a reaction zone containing a photocatalyst according to any one or more of preceding claims 1 - 6.

15. Use of a gold and palladium alloy in the form of particles deposited on a semiconductor support as photocatalyst for the generation of diatomic hydrogen from a hydrogen containing precursor under the influence of actinic radiation.
